# EUROPEAN PATENT SPECIFICATION

(11) **EP 2 291 017 B1**
(45) Date of publication and mention of the grant of the patent: **13.06.2018**
(21) Application number: 10173409.3
(22) Date of filing: 19.08.2010
(51) Int. Cl.: H04W 12/06, H04W 88/08

(54) **Method for network connection**
Netzwerkverbindungsverfahren
Procédé pour connexion de réseau

(30) Priority: 27.08.2009 TW 098128899
(43) Date of publication of application: 02.03.2011
(73) Proprietor: Arcadyan Technology Corp., Hsinchu (TW)
(72) Inventor: Tsai, Wei-Chin, Hsinchu (TW)
(74) Representative: Weickmann & Weickmann PartmbB

(56) References cited:
- WO-A2-2008/147130
- KR-A- 20090 030 629
- CYNTHIA KUO ET AL: "Low-Cost Manufacturing, Usability, and Security: An Analysis of Bluetooth Simple Pairing and Wi-Fi Protected Setup", 12 February 2007 (2007-02-12), FINANCIAL CRYPTOGRAPHY AND DATA SECURITY; [LECTURE NOTES IN COMPUTER SCIENCE], SPRINGER BERLIN HEIDELBERG, BERLIN, HEIDELBERG, PAGE(S) 325 - 340, XP019085841, ISBN: 978-3-540-77365-8 * sections 4-6 * * figures 4,5 *
- ANONYMOUS: "Windows Connect Now-NET", A WINDOWS RALLY SPECIFICATION, 8 May 2006 (2006-05-08), pages 1-60, XP002460510,
- NILSSON D K ET AL: "Unidirectional Auxiliary Channel Challenge-Response Authentication", WIRELESS TELECOMMUNICATIONS SYMPOSIUM, 2008. WTS 2008, IEEE, PISCATAWAY, NJ, USA, 24 April 2008 (2008-04-24), pages 84-91, XP031274989, ISBN: 978-1-4244-1869-5
- WI-FI ALLIANCE: "Wi-Fi CERTIFIED for Wi-Fi Protected Setup: Easing the User Experience for Home and Small Office Wi-Fi Networks", WI-FI ALLIANCE,, 1 January 2007 (2007-01-01), pages 1-14, XP002568003,
- "3rd Generation Partnership Project; Technical Specification Group Service and System Aspects; 3G Security; Wireless Local Area Network (WLAN) interworking security (Release 8)", 3GPP STANDARD; 3GPP TS 33.234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 March 2008 (2008-03-01), pages 1-101, XP050376783,

## Description

### Technical Field

The present invention relates to a method for network connection. More particularly, it relates to a method for wireless network connection.

### Background Art

The Internet is omnipresent in the modern society. Wireless Local Area Network (WLAN) is getting prevalent due to the benefits of not being equipped with cable. The original WLAN communication standard IEEE 802.11 was released in 1997, and defines the Media Access Control (MAC) and the physical layer. Under the standard, the connection between two communication equipments can proceed with an ad-hoc method and also can proceed with the cooperation between a base station (BS) and an access point (AP). In 1999, the telecommunication industry makes up a Wi-Fi Alliance, so as to solve the issues about the compatibility for the 802.11 standard products and device.

By the present technology, in order to carry out the connection under the wireless network communication standard, traditionally a user has to manually create a wireless network title, i.e. the Service Set Identifier (SSID), and then enters a set of security key into the access points and client ends respectively so as to prevent a non-admissible login cracking into the wireless network. The user has to know the background knowledge regarding Wi-Fi device and be capable of setting the parameters with respect to a demand to perform the whole procedure. Thus it is not easy for a user to utilize it. In order to ensure the security of wireless network and to make internet connection more convenient for the user, the Wi-Fi Alliance has developed a new certification scheme known as "Wi-Fi Protected Setup (WPS)" in 2007. By utilizing the WPS, without knowing the SSID and security keys or login passwords, users can set the SSID, Wi-Fi Protected Access (WPA) security keys for AP and client devices capable of using WPS in the internet. At present the WPS has two common ways to set a wireless network, i.e. "PIN Input Configuration method" and "Push Button Configuration (PBC) method."

The PIN Input Configuration method means inputting a set of sequence number to establish a connection. The Push Button Configuration (PBC) method means establishing a connection via pushing the online button, and the button thereof could be a virtual button created by software or a real button disposed on a hardware device. When a specific method is selected to establish a connection at a wireless base station, the client end just needs to select the same way to establish the connection.

The procedures to create a connection of the PIN Input Configuration method and the PBC method are almost the same. But since the PIN Input Configuration method proceeds via directly entering a PIN data of a wireless network interface card and the base station has restricted the transmitting scope of the client, therefore, the speed of establishing a connection is accordingly faster. In contrary, the PBC method proceeds via pushing the connection button of the client to establish a connection within a specific time only after the connection button at the base station is pushed. Thus the client will search first to find out whether there is a base station supporting WPS in the wireless communication range, and at the same time the PBC function of the base station has to be started to match the connection. By contrast, the speed of establishing a connection via the PBC method is slower than that via PIN Input Configuration method so that it is inconvenient.

In addition, when the PBC method is used for Wireless Distribution System (WDS), it is necessary to set the MAC addresses of others on respective APs for a connection between the APs due to the restrictions of the system architecture and necessary to have the same SSID and security mechanism, which cause the user need to set parameters via an Ethernet network and make the connection slower. Thus, it is also inconvenience for use.

### Amended introductory part of the description

A few of references are further provided as follows.

In "Low-Cost Manufacturing, Usability, and Security: An Analysis of Bluetooth Simple Pairing and Wi-Fi Protected Setup" (XP019085841), Cynthia Kuo et al., it presents that Bluetooth Simple Pairing and Wi-Fi Protected Setup specify mechanisms for exchanging authentication credentials in wireless networks. Both Simple Pairing and Protected Setup support multiple setup mechanisms, which increases security risks and hurts the user experience. To improve the security and usability of these specifications, Cynthia Kuo et al. suggest defining a common baseline for hardware features and a consistent, interoperable user experience across devices.

In KR 2009 0030629 A, it presents a wireless communication system. The wireless communication system comprises: an access point delivering to outside a beacon message, containing a data that means automatic setting by the request of a user, and operating an access setting through an exchange of a message according to a responding repeater and WPS protocol; and another access point receiving the beacon message containing a data that means automatic setting from the access point, and operating the access setting through an exchange of a message according to the access point and WPS protocol. According to the present invention, there is an advantage that a manager does not need to check a Mac address and another access data of the access point or the repeater, because the setting between the access point and the repeater, or between two access points is automatically done.

In "Windows Connect Now-NET" (XP002460510), it presents that Microsoft® Windows® Connect Now technology enables simple and secure configuration of wireless networks and provisioning of wireless hardware. Windows Connect Now-NET (WCN-NET) is the Microsoft implementation of the Wi-Fi Simple Configuration Protocol, a new standard in the Wi-Fi Alliance. WCN-NET supports configuration of devices on out-of-band Ethernet and in-band wireless networks. Windows Connect Now-NET in Microsoft Windows Vista™ communicates with access points (APs) and wireless stations by using UPnP, authenticates with them using a personal identification number (PIN), and provides wireless settings that are based on user selection. This specification defines the WCN-NET implementation details for devices that connect with systems running the Windows Vista operating system. WCN-NET is a component of the Microsoft Windows Rally™ set of technologies.

In "Unidirectional Auxiliary Channel Challenge-Response Authentication" (XP 031274989), Nilsson D K et al., it presents an approach for authentication of exchanged public values between two previously unknown devices in close proximity. Nilsson D K et al. suggest using a unidirectional auxiliary channel challenge-response scheme, where the response and challenge from one device are transmitted over an auxiliary channel. It is assumed that a network attacker cannot access the auxiliary channel, and thus, man-in-the-middle attacks are prevented since the attacker cannot learn the response and challenge. In addition, passive eavesdropping is prevented since no shared secrets are used. Nilsson D K et al. design a unidirectional auxiliary channel challenge-response protocol for Bluetooth and show that it is substantially more efficient and achieves an equal or increased level of security while maintaining the usability and convenience level for the user in comparison to the original Bluetooth protocol. The 3GPP standard document "3rd Generation Partnership Project; Technical Specification Group Service and System Aspects; 3G Security; Wireless Local Area Network (WLAN) interworking security (Release 8)", TS 33.234, V8.1.0, specifies the security architecture; trust model and security requirements for the interworking of the 3GPP System and WLAN Access Networks.

Therefore, it would be useful to invent a method for network connection to circumvent all the above issues. In order to fulfill this need the inventors have proposed an invention "method for network connection". The summary of the present invention is described as follows.

The present invention is defined in the appended independent claims. The original idea of the invention is to using a specific identify tag in the connection procedure, which tag is never utilized in the current WPS definitions. By using the specific identify tag, it not only makes network connection much easier and more convenient but is also mindful of the security, and it does even not conflict with the existing system architecture.

According to the first aspect of the present invention, a method for a network connection between a client terminal and an access point (AP) coupled to a registrar is provided. The method includes the steps of: (A) sending a first message having a specific identification tag from the client terminal to the registrar via the AP; (B) sending a second message having a question tag from the registrar to the client terminal; (C) sending a third message having an answer tag from the client terminal to the registrar; (D) determining whether the question tag and the answer tag match with each other at the registrar; and (E) if the question tag and the answer tag match with each other, sending a private WiFi setting from the registrar to the client terminal so as to connect the client terminal to the AP.

Preferably, the method is provided, wherein the step (A) further includes a step (A1) of sending a probe request from the client terminal to the AP after the client terminal confirms that the AP sends a beacon.

Preferably, the method is provided, wherein the question tag and the answer tag are coded by a coding method being selected from a group consisting of a Rivest Cipher 2 (RC2), a Rivest Cipher 4 (RC4), a Rivest Cipher 5 (RC5), a Rivest Cipher 6 (RC6) and an Advanced Encryption Standard (AES).

Preferably, the method is provided, wherein the first message further includes a Service Set Identifier (SSID) and a Media Access Control (MAC) address of the client terminal and the second message further includes an SSID and an MAC address of the registrar.

Preferably, the method is provided, wherein the step (E) further includes a step (E1) of setting a Wireless Distribution System (WDS) according to the first message and the second message if the question tag and the answer tag match with each other.

Preferably, the method is provided, wherein the step (E) further includes a step (E1) of ceasing a Wi-Fi Protected Setup (WPS) procedure if a result of the step (E) is negative.

Preferably, the method further includes a step (F) of processing a Push Button Configuration (PCB) method.

Preferably, the method is provided, wherein the first, the second and the third messages are register messages and the specific identify tag includes a specific SSID.

According to the second aspect of the present invention, a method for a network connection between a first access point (AP) and a second access point (AP) coupled to a registrar is provided. The method includes the steps of: (A) sending a specific identification tag from the first AP to the registrar via the second AP; (B) sending a question tag from the registrar to the first AP; (C) sending an answer tag from the first AP to the registrar; (D) determining whether the question tag and the answer tag match with each other at the registrar; and (E) connecting the first AP and the second AP if the question tag and the answer tag are matched.

Preferably, the method is provided, wherein the step (A) further includes a step (A1) of transforming the first AP into a client terminal by the specific identification tag.

Preferably, the method is provided, wherein the specific identification tag is included in a first message and sent from the first AP to the registrar via the second AP in the step (A), the question tag is included in a second message and sent from the registrar to the first AP in the step (B), and the answer tag is included in a third message and sent from the first AP to the registrar in the step (C). Furthermore, the first message could further include a Service Set Identifier (SSID) and a Media Access Control (MAC) address of the first AP, the second message could further include an SSID and an MAC address of the registrar, and the first, the second and the third messages could be register messages.

Preferably, the method is provided, wherein the step (E) further includes a step (E0) of setting a Wireless Distribution System (WDS) according to the first message and the second message so as to connect the first AP to the second AP. Furthermore, the step (E) could further include a step (E1) of sending a private WiFi setting from the registrar to the first AP so as to connect the first AP to the second AP if the question tag and the answer tag are matched. If the question tag and the answer tag are unpaired, a Wi-Fi Protected Setup (WPS) procedure would be ceased.

Preferably, the method further includes a step (F) of processing a Push Button Configuration (PCB) method.

According to the third aspect of the present invention, a method for connecting a first node and a second node is provided. The method includes the steps of: (A) sending a specific identification tag from the first node to the second node; (B) sending a question tag from the second node to the first node; (C) sending an answer tag from the first node to the second node; and (D) connecting the first node to the second node if the question tag and the answer tag are satisfied with a specific rule.

Preferably, the method is provided, wherein the first node is one of a first access point and a first client terminal, the second node is one of a second access point and a second client terminal, the second node further includes a registrar to determine whether the question tag and the answer tag are satisfied with the specific rule, and the question tag and the answer tag are coded by a coding method being selected from a group consisting of a Rivest Cipher 2 (RC2), a Rivest Cipher 4 (RC4), a Rivest Cipher 5 (RC5), a Rivest Cipher 6 (RC6) and an Advanced Encryption Standard (AES).

Preferably, the method further includes the steps of: (D0) determining whether the question tag and the answer tag are matched; and (D1) connecting the first node and the second node if a determination of the step (D0) is positive.

### Brief Description of Figures in the Drawings

The foregoing and other features and advantages of the present invention will be more clearly understood through the following descriptions with reference to the drawings:
Fig. 1 is a diagram showing the first communication system;
Fig. 2 is a flowchart showing the first preferred embodiment of the present invention;
Fig. 3 is a diagram showing the second communication system;
Fig. 4 is a flowchart showing the second preferred embodiment of the present invention;
Fig. 5 is a diagram showing the third communication system; and
Fig. 6 is a flowchart showing the third preferred embodiment of the present invention

### Best Mode for Carrying Out the Invention

The present invention will now be described more specifically with reference to the following embodiments. It is to be noted that the following descriptions of preferred embodiments of this invention are presented herein for the aspect of illustration and description only; it is not intended to be exhaustive or to be limited to the precise from disclosed.

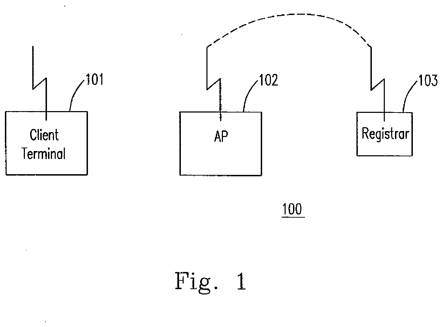

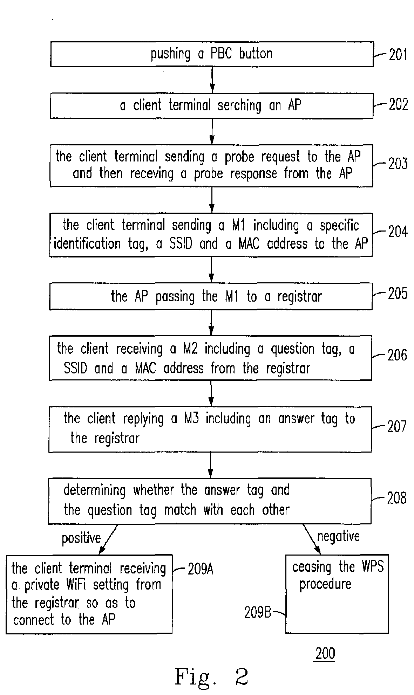

Please refer to Fig. 1 which is a diagram showing the first communication system. The communication system 100 includes a client terminal 101, an AP 102 and a registrar 103 connecting to the AP 102. Please further direct to Fig. 2 which is a flowchart showing the first preferred embodiment of the present invention. The first preferred embodiment of the invention is a first method 200 for a network connection under the WPS (Wi-Fi Protected Setup) framework.

First of all, when a virtual or real PBC button is pushed (step 201) by a user at the client terminal 101, the client terminal 101 will search a beacon emitted from the AP 102 (step 202) with Wireless Provisioning Services Information Element (WPS IE). When the client terminal 101 confirms the beacon, the client terminal 101 will send a probe request with WPS IE to the AP 102 and the AP 102 will reply a probe response with WPS IE (step 203). Next, the client terminal 101 enters the procedure for authentication and linkage and starts EAP over LAN (EAPOL). The client terminal 101 sends a first register message (M1) including a specific identification tag, a Service Set Identifier (SSID) and a MAC address to the AP 102 (step 204) and then the AP 102 will transfer M1 to a registrar 103 (step 205). The registrar 103 replies a second register message (M2) including a question tag, a Service Set Identifier (SSID) and a MAC address to the client terminal 101 (step 206). Then, the client terminal 101 replies a third register message (M3) including an answer tag to the registrar 103 (step 207). Finally, the registrar 103 determines whether the answer tag and the question tag match with each other (step 208). If the question tag and the answer tag match with each other, the registrar 103 sends a private WiFi setting to the client terminal 101, so that the client terminal 101 will connect to the AP 102 after the client terminal 101 receives the private WiFi setting (step 209A). It is noted that the register message could be any type of message. Besides, the client terminal 101 could directly send messages to the registrar 103.

In the above embodiment, the specific identification tag is the tag that has never been utilized in the current WPS definitions so that it could avoid the conflicts with the existing system architecture and even enhance security for keeping the secrecy. In addition, in some network machines, AP 102 would have at least one set of connection setting for the default (i.e. at least one set of SSID and security keys) in order to meet the special demands. However, in order that any client terminal 101 cannot be connected to the AP 102 for other sets of connection setting, the design of the specific identification tag of the preferred embodiment could inform the AP 102 to connect for a specific SSID and thus the AP 102 would send the specific data to the client terminal 101 via the WPS.

In this case, for example, the identification tag of M1 could be set as "1110 1 56 (HEX)", the question tag of M2 could be set as "R = (RND(x) % 0x10000), Qv = RC4 (R), Q = 1110 8 Qv", and the answer tag of M3 could be set as "Get Q' tag is 1110 8 Qt, A1 = RC4(Qt), Av = RC4(A1 + 0x0718), A = 1110 8 Av". After receiving M3, the registrar 103 can parse the answer tag to verify, "Get A' tag is 1110 8 At, A2 = RC4(At), A3 = RC4(Qv + 0x0718)". If A2 = A3, the answer tag and the question tag match with each other and the client terminal 101 is verified and authentic so that the private WiFi setting would be sent out. If A2 and A3 do not match or are unpaired, the WPS procedure would be ceased (step 209B). It is noted that the specific identification tag could include a specific SSID so as to inform the AP 102 to connect for the specific SSID. Besides, there could be two SSIDs for a client terminal 101, and one SSID is included in M3 and the other is included in the specification tag.

The question tag and the answer tag could be coded by a Rivest Cipher 2 (RC2), a Rivest Cipher 4 (RC4), a Rivest Cipher 5 (RC5), a Rivest Cipher 6 (RC6), an Advanced Encryption Standard (AES) or other coding methods.

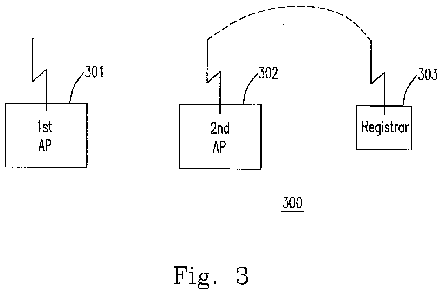

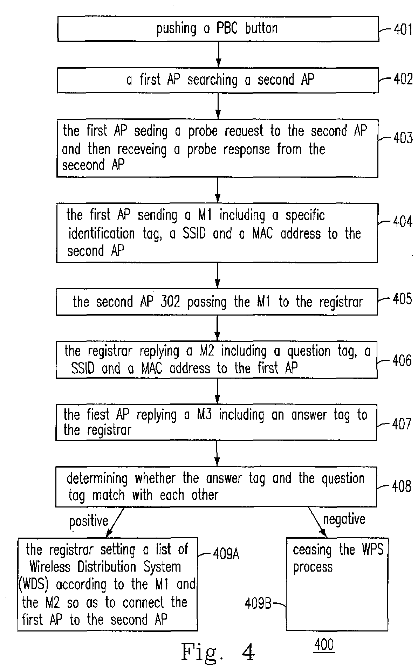

Please refer to Fig. 3 which is a diagram showing the second communication system. The communication system 300 includes a first AP 301, a second AP 302 and a registrar 303 connecting to the second AP 302. Please refer to Fig. 4 which is a flowchart showing the second preferred embodiment of the present invention. The second preferred embodiment of the invention is a second method 400 for a network connection between the two APs under the WDS (Wireless Distribution System) framework. Since a prior art needs to set up the two APs (301 and 302) for the association (i.e., setting the MAC of the first AP 301 on the second AP 302 and setting the MAC of the second AP 302 on the first AP 301), an Ethernet network has to be set up by a user who knows the MAC address, the SSID and the security key. Therefore, the first AP 301 could be transformed to a client terminal and the steps similar to the first embodiment could be performed for connecting the first AP 301 and the second AP 302.

First of all, when a virtual or real PBC button is pushed (step 401) by a user at the first AP 301, the first AP 301 will search a beacon emitted from the second AP 302 (step 402) with Wireless Provisioning Services Information Element (WPS IE). When the first AP 301 confirms the beacon, the first AP 301 will send a probe request with WPS IE to the second AP 302 and the second AP 302 will reply a probe response with WPS IE (step 403). Next, the first AP 301 enters the procedure of an authentication and an association and starts EAP over LAN (EAPOL). The first AP 301 sends a first register message (M1) including a specific identification tag, a Service Set Identifier (SSID) and a MAC address to the second AP 302 (step 404) and then the second AP 302 will transfer the M1 to the registrar 303 (step 405). The registrar 303 replies a second register message (M2) including a question tag, a Service Set Identifier (SSID) and a MAC address to the first AP 301 (step 406). Then, the first AP 301 replies a third register message (M3) including an answer tag to the registrar 303 (step 407). Finally, the registrar 303 determines whether the answer tag and the question tag match with each other (step 408). If the question tag and the answer tag match with each other, the registrar 303 sets a list of Wireless Distribution System (WDS) according to the M1 and the M2 (including the SSIDs and MAC addresses of the first and second AP 301 and 302) so as to connect the first AP 301 to the second AP 302 (step 409A). It is noted that the register message could be any type of message. Besides, the first AP 301 could directly send messages to the registrar 303. For the other example, the M1 with the specific identification tag could further include a SSID and a MAC address of the first AP 301, the M2 with the question tag could further include a SSID and a MAC address of the second AP 302 or the registrar 303, and these messages are register messages.

In the above embodiment, the specific identification tag is also not used in the WPS definitions at present so that it could avoid the conflicts with the existing system architecture and even enhance security for keeping the secrecy. The difference between the first and the second preferred embodiments is that the specific identification tag of the M1 emitted by the first AP 301 could be set to "1110 1 42 (HEX)". The specific identification tag could be used to disguise the real identity of the first AP 301 as a virtual client terminal (i.e., transforming the first AP 301 to the virtual client terminal) so as to connect to the second AP 302. The question tag of M2 could be set to "R = (RND(x) % 0x10000), Qv = RC4 (R), Q = "1110 8 Qv", and the answer tag of M3 could be set to "Get Q' tag is 1110 8 Qt, A1 = RC4(Qt), Av = RC4(A1 + 0x1223), A = 1110 8 AV". After receiving M3, the registrar 303 can parse the answer tag to verify, "Get A' tag is 1110 8 At, A2 = RC4(At), A3 = RC4(Qv + 0x1223)". If A2 = A3, the answer tag and the question tag match with each other and the virtual client terminal is authentic, so that the WDS for each other could be set up by the M1 and M2 (MAC addresses of each other) when the WPS process finishes. If A2 ≠ A3, the WPS process would be broken (step 409B). It is noted that the specific identification tag could include a specific SSID.

It is noted that the same tag is used in the first and the second preferred embodiments but the coding and decoding methods thereof are different (i.e., Av = RC4(A1 + 0x0718) and Av = RC4(A1 + 0x1223)) so as to achieve the effects of distinguishment and security. The question tag and the answer tag in the second preferred embodiment could be also coded by a Rivest Cipher 2 (RC2), a Rivest Cipher 4 (RC4), a Rivest Cipher 5 (RC5), a Rivest Cipher 6 (RC6), an Advanced Encryption Standard (AES) or other coding methods. In addition, after the first AP 301 is transformed into the virtual client terminal and gains the SSID and MAC address of the second AP 302 form the M2, the virtual client terminal could be transformed back to the first AP 301 at any step of the second embodiment to connect the second AP 302.

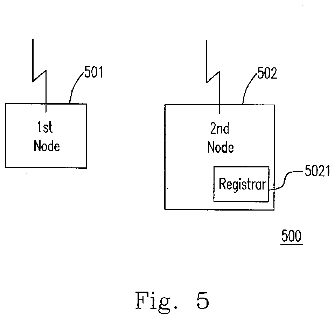

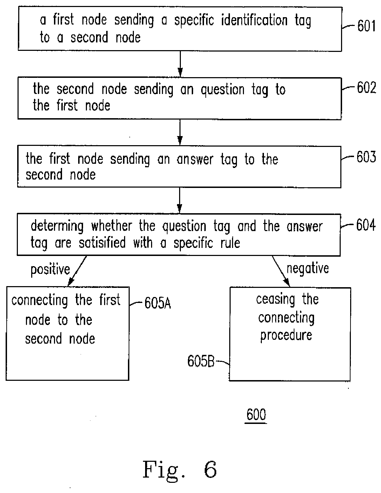

Please refer to Fig. 5 which is a diagram showing the third communication system. The communication system 500 includes a first node 501 and a second node 502. The second node 502 further includes a registrar 5021. Please refer to Fig. 6 which is a flowchart showing the third preferred embodiment of the present invention. The third preferred embodiment of the invention is a second method 600 for a network connection.

First of all, the first node 501 sends a specific identification tag to the second node 502 (step 601) and then the second node 502 sends a question tag to the first node 501 (step 602). Then, the first node 501 sends an answer tag to the second 502 (step 603). Finally, it is determined whether the question tag and the answer tag are satisfied with a specific rule (step 604). If the question tag and the answer tag are satisfied with the specific rule, the first node 501 is connected to the second node 502 (step 605A). If the question tag and the answer tag are not satisfied with the specific rule, the first node 501 cannot be connected to the second node 502 (step 605B). It is noted that the first node 501 could be an AP or a client terminal and the second node 502 could be an AP or a client terminal. The above rule could be performed based on whether the first node 501 and the second node 502 match or not. The tags could be respectively included in different messages. The specific identification tag could include a specific SSID and the message including the specific identification tag could have a normal SSID rather than the specific SSID. For the other example, the message with the specific identification tag could further include a SSID and a MAC address of the first node 501, the message with the question tag could further include an SSID and an MAC address of the second node 502, and these messages are register messages. Besides, the registrar 5021 could be configured outside the second node 502.

Based on the above embodiment, a specific identification tag could be used in the process of connecting. It not only makes network connection easier and more convenient but also enhances the security, and it even has no conflicts with the existing system architecture.

## Claims

1. A method (600) for connecting a first node (501) and an access point AP (102), when, under the Wi-Fi Protected Setup framework, a virtual or real Push Button Configuration button is pushed, comprising the steps of:
(A) sending (601) a specific identification tag, a Service Set Identifier (SSID) and a MAC address from the first node (501) to the access point AP (102) and from the access point AP (102) to a registrar (103), wherein the specific identification tag includes a specific Service Set Identifier (SSID) so as to inform the access point (AP) (102) to connect for the specific SSID, and the specific identification tag is never utilized in current Wi-Fi Protected Setup (WPS) definitions;
(B) sending (602) a question tag, a Service Set Identifier (SSID) and a MAC address from the registrar (103) to the first node (501);
(C) sending (603) an answer tag from the first node (501) to the registrar (103); and
(D) connecting (604) the first node (501) to the access point AP (102) if the question tag and the answer tag are satisfied with a specific rule, wherein the specific rule includes determining whether the question tag and the answer tag are matched_by the registrar (103).

2. The method (600) as claimed in Claim 1, **characterized in that** the first node (501) is one of a first access point and a first client terminal, the second node (502) is one of a second access point and a second client terminal, the second node (502) further comprises a registrar (5021) to determine whether the question tag and the answer tag are satisfied with the specific rule, and the question tag and the answer tag are coded by a coding method being selected from a group consisting of a Rivest Cipher 2 (RC2), a Rivest Cipher 4 (RC4), a Rivest Cipher 5 (RC5), a Rivest Cipher 6 (RC6) and an Advanced Encryption Standard (AES).

3. The method (600) as claimed in Claims 1 or 2 further **characterized by** comprising steps of:
(D0) determining (604) whether the question tag and the answer tag are matched; and
(D1) connecting (605A) the first node (501) and the second node (502) if a determination of the step (D0) is positive.

4. The method (600) as claimed in Claim 1, **characterized in that** the first node (501) is a client terminal (101) and the second node (502) is the AP(102) coupled to the registrar (103), and the method (600) is further **characterized by** comprising steps of:
(A1) sending (204 and 205) a first message having the specific identification tag from the client terminal (101) to the registrar via the AP (102);
(B1) sending (206) a second message having the question tag from the registrar (103) to the client terminal (102);
(C1) sending (207) a third message having the answer tag from the client terminal (101) to the registrar (103);
(D0) determining (208) whether the question tag and the answer tag match with each other at the registrar (103); and
(D1) if the question tag and the answer tag match with each other, sending (209A) a private WiFi setting from the registrar (103) to the client terminal (101) so as to connect the client terminal (101) to the AP (102).

5. The method (600) as claimed in Claim 4, **characterized in that** the step (A1) further comprises a step (A11) of sending (203) a probe request from the client terminal (101) to the AP (102) after the client terminal (101) confirms that the AP (102) sends a beacon.

6. The method (600) as claimed in Claims 4 or 5, **characterized in that** the first message further comprises the Service Set Identifier (SSID) and a Media Access Control (MAC) address of the client terminal, and the second message further comprises an SSID and an MAC address of the registrar (103).

7. The method (600) as claimed in any one of Claims 4 to 6, **characterized in that** the step (D1) further comprises a step (D11) of setting a Wireless Distribution System (WDS) according to the first message and the second message if the question tag and the answer tag match with each other, or ceasing (209B) the Wi-Fi Protected Setup (WPS) procedure if a result of the step (D1) is negative.

8. The method (600) as claimed in any one of Claims 4 to 7, **characterized in that** the first, the second and the third messages are register messages and the specific identify tag includes a specific SSID.

9. The method (600) as claimed in Claim 1, **characterized in that** the first node (501) is a first access point (AP) (301) and the second node (502) is a second access point (AP) (302) coupled to a registrar (303), and the method (600) is further **characterized by** comprising steps of:
(A1) sending (404 and 405) a specific identification tag from the first AP (301) to the registrar (303) via the second AP (302);
(B1) sending (406) a question tag from the registrar (303) to the first AP (301);
(C1) sending (407) an answer tag from the first AP (301) to the registrar (303);
(D0) determining (408) whether the question tag and the answer tag match with each other at the registrar (303); and
(D1) connecting (409A) the first AP (301) and the second AP (302) if the question tag and the answer tag are matched.

10. The method (600) as claimed in Claim 9, **characterized in that** the step (A1) further comprises a step (A11) of transforming the first AP (301) into a client terminal (101) by the specific identification tag.

11. The method (600) as claimed in Claims 9 or 10, **characterized in that** the specific identification tag is included in a first message and sent from the first AP (301) to the registrar (303) via the second AP (302) in the step (A1), the question tag is included in a second message and sent from the registrar (303) to the first AP (301) in the step (B1), and the answer tag is included in a third message and sent from the first AP (301) to the registrar (303) in the step (C1).

12. The method (600) as claimed in Claim 11, **characterized in that** the first message further comprises a Service Set Identifier (SSID) and a Media Access Control (MAC) address of the first AP, the second message further comprises an SSID and an MAC address of the registrar, and the first, the second and the third messages are register messages.

13. The method (600) as claimed in any one of Claims 9 to 12, **characterized in that** the step (D1) further comprises a step (D10) of setting (409A) a Wireless Distribution System (WDS) according to the first message and the second message so as to connect the first AP (301) to the second AP (302).

14. The method (600) as claimed in any one of Claims 9 to 13, **characterized in that** the step (D1) further comprises a step (D11) of sending a private WiFi setting from the registrar (303) to the first AP (301) so as to connect the first AP (301) to the second AP (302) if the question tag and the answer tag are matched, or to ceasing (409B) a Wi-Fi Protected Setup (WPS) procedure if the question tag and the answer tag are unpaired.

15. The method (600) as claimed in any one of Claims 1 to 14 further **characterized by** comprising a step (E) of processing a Push Button Configuration (PCB) method.

## Patentansprüche

1. Verfahren (600) zum Verbinden eines ersten Knotens (501) mit einem Zugriffspunkt AP (102), wenn unter dem Wi-Fi-geschützten Setup-Rahmenwerk ein virtueller oder realer Push-Button-Configuration-Knopf gedrückt wird, wobei es die Schritte aufweist:
(A) Senden (601) eines spezifischen Identifizierungskennzeichens, eines Service Set Identifiers (SSID) und einer MAC-Adresse von dem ersten Knoten (501) zu dem Zugriffspunkt (AP) (102) und von dem Zugriffspunkt AP (102) zu einem Registrar (103), wobei das spezifische Identifizierungskennzeichen einen spezifischen Service Set Identifier (SSID) enthält, um den Zugriffspunkt (AP) (102) zur Verbindung des spezifischen SSID zu informieren, und das spezifische Identifizierungskennzeichen in gegenwärtigen Wi-Fi-geschützten Setup (WPS)-Definitionen niemals genutzt wird;
(B) Senden (602) eines Fragekennzeichens, eines Service Set Identifiers (SSID) und einer MAC-Adresse von dem Registrar (103) zu dem ersten Knoten (501);
(C) Senden (603) eines Antwortkennzeichens von dem ersten Knoten (501) zu dem Registrar (103); und
(D) Verbinden (604) des ersten Knotens (501) mit dem Zugriffspunkt AP (102), wenn das Fragekennzeichen und das Antwortkennzeichen eine spezifische Regel erfüllen, wobei die spezifische Regel enthält, durch den Registrar (103) zu bestimmen, ob das Fragekennzeichen und das Antwortkennzeichen zusammenpassen.

2. Das Verfahren (600) von Anspruch 1, **dadurch gekennzeichnet, dass** der erste Knoten (501) einer eines ersten Zugriffspunkts und eines ersten Client-Terminals ist, der zweite Knoten (502) einer eines zweiten Zugriffspunkts und eines zweiten Client-Terminals ist, der zweite Knoten ferner einen Registrar (5021) aufweist, um zu bestimmen, ob das Fragekennzeichen und das Antwortkennzeichen die spezifische Regel erfüllen, und das Fragekennzeichen und das Antwortkennzeichen durch ein Codierungsverfahren codiert werden, das aus einer Gruppe ausgewählt ist, bestehend aus einem Rivest Cipher 2 (RC2), einem Rivest Cipher 4 (RC4), einem Rivest Cipher 5 (RC5), einem Rivest Cipher 6 (RC6) und einem Advanced Encryption Standard (AES).

3. Das Verfahren (600) nach den Ansprüchen 1 oder 2, das ferner **dadurch gekennzeichnet ist, dass** es die Schritte aufweist:
(D0) Bestimmen (604), ob das Fragekennzeichen und das Antwortkennzeichen zusammenpassen; und
(D1) Verbinden (605A) des ersten Knotens (501) mit dem zweiten Knoten (502), wenn eine Bestimmung des Schritts (D0) positiv ist.

4. Das Verfahren (600) nach Anspruch 1, **dadurch gekennzeichnet, dass** der erste Konten (501) ein Clinent-Terminal (101) ist und der zweite Konten (502) der dem Registrar (103) gekoppelte AP (102) ist und das Verfahren (600) ferner **dadurch gekennzeichnet ist, dass** es die Schritte aufweist:
(A1) Senden (204 und 205) einer ersten Meldung mit dem spezifischen Identifizierungskennzeichen von dem Client-Terminal (101) über den AP (102) zu dem Registrar;
(B1) Senden (206) einer zweiten Meldung mit dem Fragekennzeichen von dem Registrar (103) zu dem Client-Terminal (102);
(C1) Senden (207) einer dritten Meldung mit dem Antwortkennzeichen von dem Client-Terminal (101) zu dem Registrar (103);
(D0) Bestimmen (208), ob das Fragekennzeichen und das Antwortkennzeichen dem Registrar (103) zusammenpassen; und
(D1) wenn das Fragekennzeichen und das Antwortkennzeichen zusammenpassen, Senden (209A) einer privaten Wi-Fi-Einstellung von dem Registrar (103) zu dem Client-Terminal (101), um das Client-Terminal (101) mit dem AP (102) zu verbinden.

5. Das Verfahren (600) von Anspruch 4, **dadurch gekennzeichnet, dass** der Schritt (A1) ferner einen Schritt (A11) aufweist, eine Messanfrage von dem Client-Terminal (101) zu dem AP (102) zu senden (203), nachdem das Client-Terminal (101) bestätigt, dass der AP (102) eine Peilung sendet.

6. Das Verfahren (600) nach Anspruch 4 oder 5, **dadurch gekennzeichnet, dass** die erste Meldung ferner einen Service Set Identifier (SSID) und eine Media Acess Control (MAC)-Adresse des Client-Terminals aufweist, und die zweite Meldung ferner einen SSID und eine MAC-Adresse des Registrars (103) aufweist.

7. Das Verfahren (600) nach einem der Ansprüche 4 bis 6, **dadurch gekennzeichnet, dass** der Schritt (D1) ferner einen Schritt (D11) aufweist, ein Wireless Distribution System (WDS) gemäß der ersten Meldung und der zweiten Meldung zu setzen, wenn das Fragekennzeichen und das Antwortkennzeichen zusammenpassen, oder die Wi-Fi-geschützte Setup (WPS)-Prozedur zu beenden (209B), wenn ein Ergebnis von Schritt (D1) negativ ist.

8. Das Verfahren (600) nach einem der Ansprüche 4 bis 7, **dadurch gekennzeichnet, dass** die ersten, zweiten und dritten Meldungen Registermeldungen sind, und das spezifische Identifizierungskennzeichen einen spezifischen SSID enthält.

9. Das Verfahren (600) nach Anspruch 1, **dadurch gekennzeichnet, dass** der erste Knoten (501) ein erster Zugriffspunkt (AP) (301) ist und der zweite Knoten ein mit einem Registrar (303) gekoppelter zweiter Zugriffspunkt (AP) (302) ist, und das Verfahren (600) ferner **dadurch gekennzeichnet ist, dass** es die Schritte aufweist:
(A1) Senden (404 und 405) eines spezifischen Identifizierungskennzeichens von dem ersten AP (301) über den zweiten AP (302) zu dem Registrar (303);
(B1) Senden (406) eines Fragekennzeichens von dem Registrar (303) zu dem ersten AP (301);
(C1) Senden (407) eines Antwortkennzeichens von dem ersten AP (301) zu dem Registrar (303);
(D0) Bestimmen (408), ob das Fragekennzeichen und das Antwortkennzeichen am Registrar (303) zusammenpassen; und
(D1) Verbinden (409A) des ersten AP (301) mit dem zweiten AP (302), wenn das Fragekennzeichen und das Antwortkennzeichen zusammenpassen.

10. Das Verfahren (600) nach Anspruch 9, **dadurch gekennzeichnet, dass** der Schritt (A1) ferner einen Schritt (A11) aufweist, den ersten AP (301) durch das spezifische Identifizierungskennzeichen in ein Client-Terminal (101) zu transformieren.

11. Das Verfahren (600) nach Anspruch 9 oder 10, **dadurch gekennzeichnet, dass** das spezifische Identifizierungskennzeichen in einer ersten Meldung enthalten ist und im Schritt (A1) von dem ersten AP (301) über den zweiten AP (302) zu dem Registrar (303) gesendet wird, das Fragekennzeichen in einer zweiten Meldung enthalten ist und im Schritt (B1) von dem Registrar (303) zu dem ersten AP (301) gesendet wird, und das Antwortkennzeichen in einer dritten Meldung enthalten ist, und im Schritt (C1) von dem ersten AP (301) zu dem Registrar (303) gesendet wird.

12. Das Verfahren (600) nach Anspruch 11, **dadurch gekennzeichnet, dass** die erste Meldung ferner einen Service Setup Identifier (SSID) und eine Media Acess Control (MAC)-Adresse des ersten AP aufweist, die zweite Meldung ferner einen SSID und eine MAC-Adresse des Registrars aufweist, und die ersten, zweiten und dritten Meldungen Registermeldungen sind.

13. Das Verfahren (600) nach einem der Ansprüche 9 bis 12, **dadurch gekennzeichnet, dass** der Schritt (D1) ferner einen Schritt (D10) aufweist, ein Wireless Distribution System (WDS) gemäß der ersten Meldung und der zweiten Meldung zu setzen (409A), um den erste AP (301) mit dem zweiten AP (302) zu verbinden.

14. Das Verfahren (600) nach einem der Ansprüche 9 bis 13, **dadurch gekennzeichnet, dass** der Schritt (D1) ferner einen Schritt (D11) aufweist, eine private Wi-Fi-Einstellung von dem Registrar (303) zu dem ersten AP (301) zu senden, um den ersten AP (301) mit dem zweiten AP (302) zu verbinden, wenn das Fragekennzeichen und das Antwortkennzeichen zusammenpassen, oder eine Wi-Fi-Protected-Setup (WPS)-Prozedur zu beenden (409B), wenn das Fragekennzeichen und das Antwortkennzeichen unpaarig sind.

15. Das Verfahren (600) nach einem der Ansprüche 1 bis 14, das ferner **dadurch gekennzeichnet ist, dass** es einen Schritt (E) aufweist, ein Push Button Configuration (PCB)-Verfahren zu bearbeiten.

## Revendications

1. Un procédé (600) pour connecter un premier noeud (501) et un point d'accès AP (102) quand, dans le cadre du Wi-Fi Protected Setup un bouton Push Button Configuration virtuel ou réel est poussé, comprenant les étapes suivantes :
(A) envoyer (601) un tag d'identification spécifique, un Service Set Identifier (SSID) et une adresse MAC du premier noeud (501) au point d'accès AP (102) et du point d'accès AP (102) à un registrar (103),
où le tag d'identification spécifique comprend un Service Set Identifier (SSID) spécifique pour informer le point d'accès AP (102) pour connecter pour le SSID spécifique, et le tag d'identification spécifique n'est jamais utilisée dans des définitions Wi-Fi Protected Setup (WPS) actuelles;
(B) envoyer (602) un tag de question, un Service Set Identifier (SSID) et une adresse MAC du registrar (103) au premier noeud (501) ;
(C) envoyer (603) un tag de réponse du premier noeud (501) au registrar (103) ;
et
(D) connecter (604) le premier noeud (501) au point d'accès AP (102) quand le tag de question et le tag de réponse sont satisfaits avec une règle spécifique, où la règle spécifique comprend de déterminer si le tag de question et le tag de réponse sont alignés par le registrar (103).

2. Le procédé (600) selon la revendication 1, **caractérisé en ce que** le premier noeud (501) est un parmi un premier point d'accès et un premier terminal client, le deuxième noeud (502) est un parmi un deuxième point d'accès et un deuxième terminal client, le deuxième noeud (502) comprend en outre un registrar (5021) pour déterminer si le tag de question et le tag de réponse sont satisfaits avec la règle spécifique et le tag de question et le tag de réponse sont codés par un méthode de codage étant sélecté dans un groupe comprenant un Rivest Cipher 2 (RC2), un Rivest Cipher 4 (RC4), un Rivest Cipher 5 (RC5), un Rivest Cipher 6 (RC6) et un Advanced Encryption Standard (AES).

3. Le procédé (600) selon les revendications 1 ou 2, **caractérisé en outre en ce qu'**il comprend les étapes suivantes :
(D0) déterminer (604) si le tag de question et le tag de réponse sont alignés ;
et (D1) connecter (605A) le premier noeud (501) et le deuxième noeud (502) si une détermination de l'étape (D0) est positive.

4. Le procédé (600) selon la revendication 1, **caractérisé en ce que** le premier noeud (501) est un terminal client (101) et le deuxième noeud (502) est le AP (102) accouplé au registrar (103) et le procédé (600) est en outre **caractérisé en ce qu'**il comprend les étapes suivantes :
(A1) envoyer (204 et 205) un premier message, ayant le tag d'identification, spécifique du terminal client (101) au registrar via le AP (102) ;
(B1) envoyer (206) un deuxième message, ayant le tag de question, du registrar (103) au terminal client (102) ;
(C1) envoyer (207) un troisième message, ayant le tag de réponse, du terminal client (101) au registrar (103) ;
(D0) déterminer (208) si le tag de question et le tag de réponse correspondent mutuellement au registrar (103) ; et
(D1) si le tag de question et le tag de réponse correspondent, envoyer (209A) des paramètres Wi-Fi privés du registrar (103) au terminal client (101) pour connecter le terminal client (101) au AP (102).

5. Le procédé (600) selon la revendication 4, **caractérisé en ce que** l'étape (A1) comprend en outre une étape (A11) d'envoyer (203) une demande de détection du terminal client (101) au AP (102) après que le terminal client (101) confirme que le AP (102) envoie une balise.

6. Le procédé (600) selon les revendications 4 ou 5, **caractérisé en ce que** le premier message comprend en outre le Service Set Identifier (SSID) et une adresse Media Access Control (MAC) du terminal client et le deuxième message comprend en outre un SSID et une adresse MAC du registrar (103).

7. Le procédé (600) selon une des revendications 4 à 6, **caractérisé en ce que** l'étape (D1) comprend en outre une étape (D11) de régler un Wireless Distribution System (WDS) en accord avec le premier message et le deuxième message quand le tag de question et le tag de réponse correspondent, ou cesser (209B) le procédé de Wi-Fi Protected Setup (WPS) quand un résultat de l'étape (D1) est négatif.

8. Le procédé (600) selon une des revendications 4 à 7, **caractérisé en ce que** les premiers, deuxièmes et troisièmes messages sont des messages de registre et le tag spécifique d'identification comprend un SSID spécifique.

9. Le procédé (600) selon la revendication 1, **caractérisé en ce que** le premier noeud (501) est un premier point d'accès (AP) (301) et le deuxième noeud (502) est un deuxième point d'accès (AP) (302) accouplé à un registrar (303) et le procédé (600) est en outre **caractérisé en ce qu'**il comprend les étapes suivantes :
(A1) envoyer (404 et 405) un tag d'identification spécifique du premier AP (301) au registrar (303) via le deuxième AP (302) ;
(B1) envoyer (406) un tag de question du registrar (303) au premier AP (301) ;
(C1) envoyer (407) un tag de réponse du premier AP (301) au registrar (303) ;
(D0) déterminer (408) si le tag de question et le tag de réponse correspondent au registrar (303) ; et
(D1) connecter (409A) le premier AP (301) et le deuxième AP (302) si le tag de question et le tag de réponse sont alignés.

10. Le procédé (600) selon la revendication 9, **caractérisé en ce que** l'étape (A1) comprend en outre une étape (A11) de transformer le premier AP (301) en un terminal client (101) par le tag d'identification spécifique.

11. Le procédé (600) selon les revendications 9 ou 10, **caractérisé en ce que** le tag d'identification spécifique est compris dans un premier message et envoyé du premier AP (301) au registrar (303) via le deuxième AP (302) pendant l'étape (A1), le tag de question est inclus dans un deuxième message et envoyé du registrar (303) au premier AP (301) pendant l'étape (B1), et le tag de réponse est inclus dans un troisième message et envoyé du premier AP (301) au registrar (303) pendant l'étape (C1).

12. Le procédé (600) selon la revendication 11, **caractérisé en ce que** le premier message comprend en outre un Service Set Identifier (SSID) et une adresse Media Access Control (MAC) du premier AP, le deuxième message comprenant en outre un SSID et une adresse MAC du registrar, et les deuxièmes et les troisièmes messages sont des messages registre.

13. Le procédé (600) selon une des revendications 9 à 12, **caractérisé en ce que** l'étape (D1) comprend en outre une étape (D10) de régler (409A) un Wireless Distribution System (WDS) selon le premier message et le deuxième message pour connecter le premier AP (301) au deuxième AP (302).

14. Le procédé (600) selon une des revendications 9 à 13, **caractérisé en ce que** l'étape (D1) comprend en outre une étape (D11) d'envoyer un réglage Wi-Fi privé du registrar (303) au premier AP (301) pour connecter le premier AP (301) au deuxième AP (302) quand le tag de question et le tag de réponse sont alignés, ou de cesser (409B) un procédé de Wi-Fi Protected Setup (WPS) quand le tag de question et le tag de réponse ne correspondent pas.

15. Le procédé (600) selon une des revendications 1 à 14, **caractérisé en outre en ce qu'**il comprend une étape (E) de traitement d'un procédé de Configuration de Bouton-Poussoir (PCB).
